# EUROPEAN PATENT APPLICATION

(11) **EP 3 223 241 A1**
(43) Date of publication of application: **27.09.2017**
(21) Application number: 15860361.3
(22) Date of filing: 16.12.2015
(51) Int. Cl.: G06T 7/60, G06T 1/00

(54) **TRAVEL ROUTE RECOGNITION DEVICE, AND TRAVEL ASSISTANCE SYSTEM USING SAME**

(30) Priority: 18.11.2014 JP 2014233528
(71) Applicant: Hitachi Automotive Systems, Ltd., Hitachinaka-shi Ibaraki 312-8503 (JP)
(72) Inventor: KAKEGAWA, Shinji, Tokyo 100-8280 (JP); TSUTSUI, Takashi, Hitachinaka-shi Ibaraki 312-8503 (JP); MATONO, Haruki, Tokyo 100-8280 (JP); TAKEMURA, Masayuki, Tokyo 100-8280 (JP); SHIMA, Takeshi, Tokyo 100-8280 (JP)
(74) Representative: MERH-IP Matias Erny Reichl Hoffmann Patentanwälte PartG mbB
(86) International application number: PCT/IB2015/002348
(87) International publication number: WO 2016/079591

(57) **Abstract**

Provided are a travel route recognition device and a travel assistance system using the same, which are capable of precisely recognizing the positions of white lines and road boundaries even if, for example, there is a decrease in the accuracy of the detection of both white lines and road boundaries on the travel route. The direction of the travel route is estimated on the basis of the direction of a linear site included in an image obtained by imaging units, and the direction of the boundaries of a surface region included in a distance image comprising three-dimensional distance information generated on the basis of the images obtained by the imaging units or on the basis of distance information detected by the distance detection unit.

## Description

### Technical Field

The present invention concerns a travel route recognition device and a travel assistance system using the travel route recognition device, and relates to a travel route recognition device that recognizes, for example, a white line and a road boundary on a travel route around a vehicle and a travel assistance system using the travel route recognition device.

### Background Art

Conventionally, there have been developed systems that detect a white line, a road boundary (the boundary with a sidewalk, a side strip, a curb, or the like), etc. on the road (the travel route) a vehicle, such as an automobile, travels on the basis of information obtained from a camera or radar mounted on the vehicle and use a result of the detection for assisting a driver in driving. As an example of such systems, there is known a system (a lane departure avoidance system) that alerts a driver by giving an alarm or the like, for example, when a vehicle has come close to a white line and is likely to depart from a traffic lane (the lane the vehicle is traveling), and further, when the vehicle is in no state to avoid the lane departure, automatically controls the steering, the accelerator, the brake, or the like to avoid the lane departure.

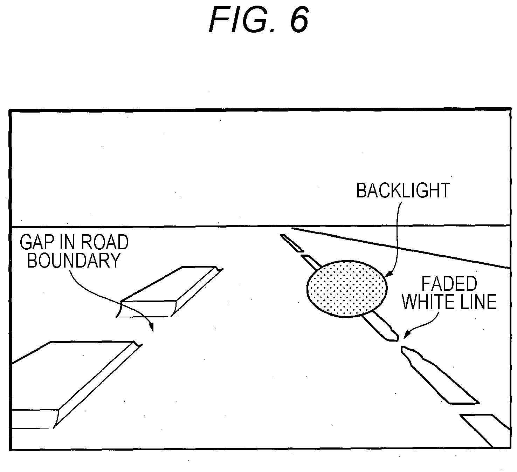

Incidentally, in case of detecting a white line, a road boundary, etc. on a road on the basis of information obtained from a camera or a radar, the accuracy of the detection is known to decrease due to various factors including, for example, the state of light such as backlight, the weather condition (rain, fog, snow, etc.), objects present on the road (a puddle, a snowfall, surrounding trees, a manhole, a sign, etc.), the shadows on the road, a faded white line, a gap in the sidewalk or curb, and any other objects falling within a camera view (windshield wipers, dirt or raindrops on the windshield, etc.) (see FIG. 6).

As a conventional technology coping with this problem, there are known a technology for detecting only an intended sidewall as an uninterrupted three-dimensional object that serves as the boundary of a road, such as a guardrail, a shrubbery, or a series of pylons, when the sidewall is partially hidden by another object (PTL 1) and a technology for recognizing characters of a sign marking on the shadow or the road and the position of a line marking when there is a vehicle ahead (PTL 2) .

An outside monitoring device for vehicle disclosed in PTL 1 includes a measuring means of detecting an object within a set range outside a vehicle and outputting position information on this object, a sidewall linear detecting means of detecting the presence or absence of a sidewall as an uninterrupted three-dimensional object that serves as the boundary of a road and a linear expression approximating to the position of this sidewall on the basis of the position information from the measuring means, and a sidewall area detecting means of setting a spatial domain around the linear expression detected by the sidewall linear detecting means and detecting the area where the sidewall is present by extracting only data within this spatial domain.

Furthermore, a road environment recognition device disclosed in PTL 2 includes an image pickup means of taking an image of a view in front of a vehicle in a traveling direction, a means of creating an edge image that is an image obtained by extracting only the outline of an object from the image taken by the image pickup means, and a line marking recognizing means of extracting an edge portion not interrupted for at least a predetermined length from portions of the edge image that correspond to the road surface near the vehicle and correspond to the road surface on the left or right side of the vehicle and recognizing the extracted edge portion as a line marking on the left or right side of the vehicle.

### Citation List

### Patent Literature

PTL 1: JP 06-266828 A
PTL 2: JP 07-220194 A

### Summary of Invention

### Technical Problem

However, in the conventional technologies disclosed in PTLs 1 and 2, only a sidewall as an uninterrupted three-dimensional object that serves as the boundary of a road or an edge portion not interrupted for at least a predetermined length is an object to be detected; therefore, there is a problem that in case the accuracy of the detection is decreased due to any of the above-mentioned factors, the position of an intended sidewall or line marking is still not able to be accurately detected.

That is, in the above-described lane departure avoidance system, a white line and a road boundary on a travel route are objects to be detected; however, in case the accuracy of detecting both a white line and a road boundary is decreased, the positions of a white line and a road boundary are not able to be accurately detected, which may cause a false alarm or error control.

The present invention has been made in view of the above problem, and an object of the invention is to provide a travel route recognition device capable of accurately recognizing, for example, the positions of a white line and a road boundary on a travel route even in case the accuracy of detecting both the white line and the road boundary is decreased and a travel assistance system using the travel route recognition device.

### Solution to Problem

In order to solve the problem, a travel route recognition device according to the present invention is a travel route recognition device for recognizing a travel route on which a vehicle travels, and the travel route recognition device includes: a linear site direction extraction unit that extracts a direction of a linear site included in an image acquired by an image pickup unit mounted on the vehicle; a distance image generation unit that generates a distance image including three-dimensional distance information from the image acquired by the image pickup unit or distance information detected by a distance detection unit mounted on the vehicle; a boundary direction extraction unit that extracts a direction of an edge of a plane region included in the distance image generated by the distance image generation unit; and a travel route direction estimation unit that estimates a direction of the travel route based on the direction of the linear site and the direction of the edge of the plane region.

In addition, a travel assistance system according to the present invention includes : the travel route recognition device according to claim 8; and a travel assistance control device that assists travel of the vehicle based on the position of the demarcation line and the position of the road boundary that have been detected by the travel route recognition device.

### Advantageous Effects of Invention

According to the present invention, the direction of a travel route is estimated on the basis of the direction of a linear site included in an image acquired by an image pickup unit and the direction of the edge of a plane region included in a distance image including three-dimensional distance information generated based on the image acquired by the image pickup unit or distance information detected by a distance detection unit, thereby, for example, even in case the accuracy of detecting both a white line and a road boundary on a travel route is decreased, the positions of the white line and the road boundary can be accurately recognized (estimated).

Problems, configurations, and advantageous effects other than the above will be revealed in the following description of embodiments.

### Brief Description of Drawings

FIG. 1 is a system configuration diagram schematically showing a system configuration of a travel assistance system to which embodiment 1 of a travel route recognition device according to the present invention is applied.
FIG. 2 is an internal configuration diagram showing an internal configuration of the travel route recognition device shown in FIG. 1.
FIG. 3 is a diagram illustrating processing contents of a feature integration unit and a travel route direction estimation unit shown in FIG. 2.
FIG. 4 is an internal configuration diagram showing an internal configuration of embodiment 2 of a travel route recognition device according to the present invention.
FIG. 5 is an internal configuration diagram showing an internal configuration of embodiment 3 of a travel route recognition device according to the present invention.
FIG. 6 is a diagram showing an example of an image taken by an in-vehicle camera.

### Description of Embodiments

Embodiments of a travel route recognition device and a travel assistance system using the travel route recognition device according to the present invention are described below with reference to drawing.

### [Embodiment 1]

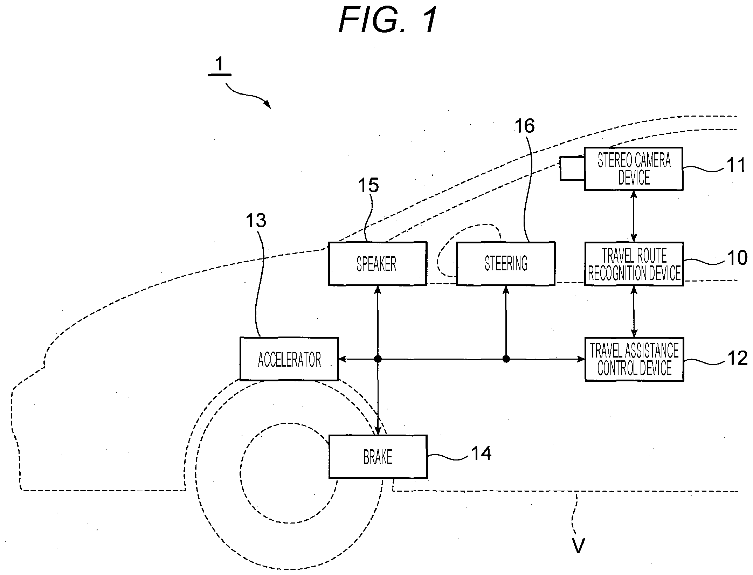

FIG. 1 schematically shows a system configuration of a travel assistance system to which embodiment 1 of a travel route recognition device according to the present invention is applied.

A travel assistance system 1 shown in FIG. 1 is mounted on a vehicle V such as an automobile, and is composed mainly of a stereo camera device 11 composed of a plurality of (in the present embodiment, two) cameras, a travel route recognition device 10 that recognizes a travel route around the vehicle V from multiple images taken synchronously by the cameras of the stereo camera device 11 respectively, and a travel assistance control device 12 that assists the travel of the vehicle V by controlling various devices (for example, an accelerator 13, a brake 14, a speaker 15, a steering 16, etc.) mounted on the vehicle V on the basis of a result of the recognition by the travel route recognition device 10.

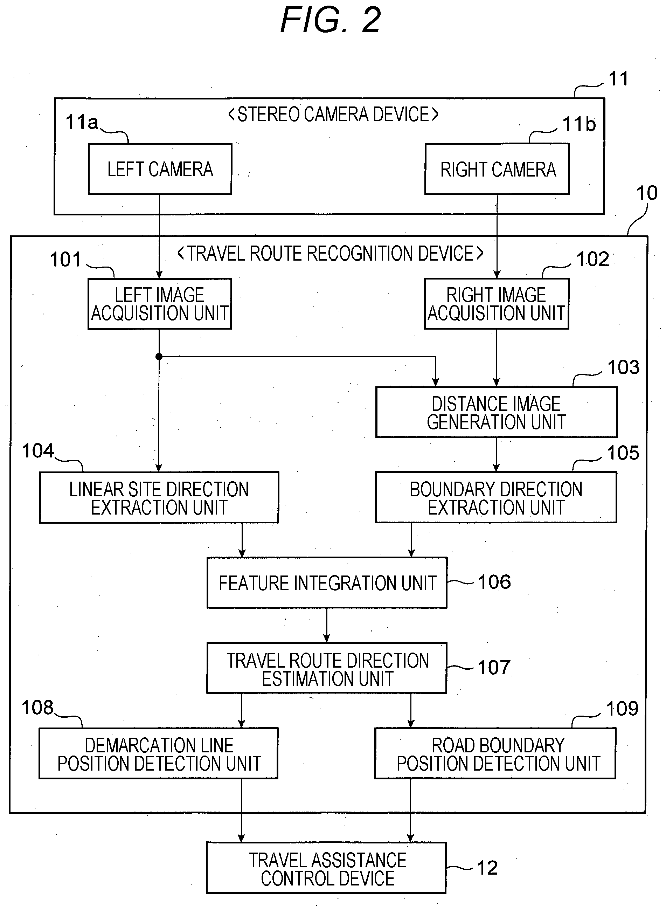

The stereo camera device 11 is installed, for example, on the near side of an upper part of a front windshield of the vehicle V with its lens pointing ahead of the vehicle V, and includes a left camera 11a and a right camera 11b as a pair of image pickup units that take an image of a view in front of the vehicle V and acquire image information. The left camera 11a and the right camera 11b each have an image pickup device such as a CCD (Charge Coupled Device) or a CMOS (Complementary Metal Oxide Semiconductor), and are installed so as to take an image of a view in front of the vehicle V from the positions spaced apart in a vehicle width direction (a crosswise direction), respectively (see FIG. 2).

The travel route recognition device 10 is a device that recognizes a travel route on the basis of image information of an area to be photographed in front of the vehicle V acquired in time series at predetermined intervals by the stereo camera device 11, and, particularly, recognizes a demarcation line such as a white line (including a broken line) and a road boundary (which is the edge of the travel route and the boundary with a sidewalk, a side strip, a curb, or the like) on the travel route and outputs a result of the recognition to the travel assistance control device 12. Incidentally, this travel route recognition device 10 is composed of a camera control unit that controls the stereo camera device 11 (for example, controls the timing at which each of the cameras 11a and 11b takes an image and the amount of exposure), a RAM (Random Access Memory) that is temporary storage, a ROM (Read Only Memory) that stores therein a program and various initial values, a CPU (Central Processing Unit) that controls the entire system, an external IF (Interface) that outputs recognition information, etc. outside the system, an image processing LSI (Large Scale Integration), etc.; these components are connected via a bus so as to be able to communicate with one another.

On the basis of a result of recognition (a result of recognition of a demarcation line or a road boundary) received from the travel route recognition device 10, the travel assistance control device 12 activates the speaker 15 of the vehicle V, or calculates the accelerator control amount, the brake control amount, and the steering control amount for assisting the travel of the vehicle V and performs the adjustment of the accelerator 13, the brake 14, the steering 16, and the like.

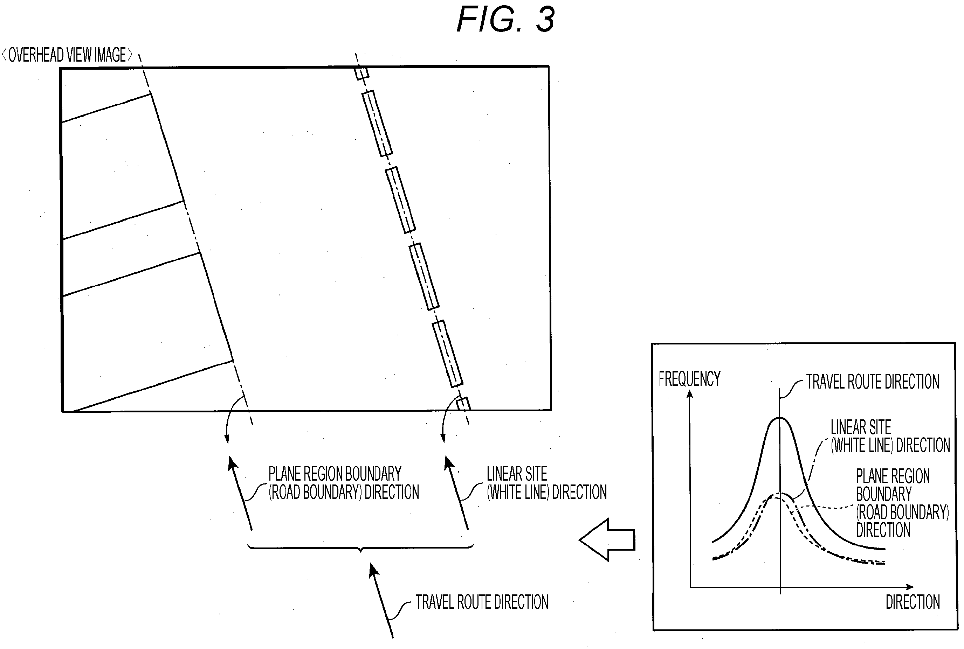

FIG. 2 concretely shows an internal configuration of the travel route recognition device shown in FIG. 1; FIG. 3 illustrates processing contents of a feature integration unit and a travel route direction estimation unit shown in FIG. 2.

Incidentally, in the following description, the case where the positions of a white line (a demarcation line) and a road boundary that are present in front of the vehicle V are recognized by the travel route recognition device 10 is described in concrete terms. Since a white line and a road boundary on a travel route have relevance (for example, they are nearly parallel to each other), even in case the accuracy of detecting both a white line and a road boundary on the travel route is decreased, the decrease in the accuracy of detecting both a white line and a road boundary is assumed to be able to be complemented by setting both a white line and a road boundary as objects to be detected and using their relevance.

The travel route recognition device 10 includes, as shown in FIG. 2, a left image acquisition unit 101, a right image acquisition unit 102, a distance image generation unit 103, a linear site direction extraction unit 104, a boundary direction extraction unit 105, a feature integration unit 106, a travel route direction estimation unit 107, a demarcation line position detection unit 108, and a road boundary position detection unit 109.

The left image acquisition unit 101 and the right image acquisition unit 102 acquire left and right images taken by the left camera 11a and the right camera 11b of the stereo camera device 11 and transmit the acquired left and right images to the distance image generation unit 103, respectively, and either the left image or the right image (in an example shown in FIG. 2, the left image) is transmitted to the linear site direction extraction unit 104. Incidentally, the left image acquisition unit 101 and the right image acquisition unit 102 can acquire the left and right images taken by the left camera 11a and the right camera 11b from the RAM that is temporary storage.

The distance image generation unit 103 generates a distance image (a parallax image) by using the left and right images acquired by the left image acquisition unit 101 and the right image acquisition unit 102, and transmits the generated distance image to the boundary direction extraction unit 105. Specifically, parallax (a position gap between images) is calculated by block matching on the basis of the left and right images acquired through the left image acquisition unit 101 and the right image acquisition unit 102, and a distance image (a parallax image) including three-dimensional distance information (spatial information) is generated on the basis of the calculated parallax.

More specifically, through block matching, the distance image generation unit 103 marks a certain-shaped first block including multiple pixels off from one of the images (for example, the left image), and marks a second block having the same size, shape, and position as the first block off from the other image (for example, the right image), and then calculates a correlation value of two brightness patterns in the first and second blocks at each position by shifting the second block in a lateral direction by one pixel at a time, and searches for a position at which the lowest correlation value is obtained, i.e., the correlation is highest (corresponding point search) . Incidentally, as a method for calculating this correlation value, for example, SAD (Sum of Absolute Difference), SSD (Sum of Squared Difference), NCC (Normalized Cross Correlation), the gradient method, etc. can be used. As a result of the search, when the position at which the correlation is highest has been identified, the distance between a specific pixel in the first block and a specific pixel located at the identified position in the second block is calculated as parallax, and with this as one step, the same step is performed on all the pixels, thereby a distance image can be generated.

The linear site direction extraction unit 104 extracts a linear site that can be a candidate demarcation line (white line) on the travel route and the direction of the linear site by using the left image acquired by the left image acquisition unit 101, and transmits the extracted direction of the linear site to the feature integration unit 106. Specifically, multiple linear sites are detected from the left image not including distance information acquired by the left image acquisition unit 101 through the linear computation such as Hough transform, and, of directions that the detected linear sites have, the most frequently detected direction is extracted as the direction of the linear sites.

Incidentally, the linear sites include not only a predetermined-length straight line extending continuously in one direction but also a continuous predetermined-length curved line. The direction of the linear site extracted by the linear site direction extraction unit 104 means, if the linear site is a straight line extending in one direction, the direction parallel to the straight line; if the linear site is a curved line, the direction of a tangent (a normal) to the curved line.

On the other hand, the boundary direction extraction unit 105 extracts the edge of a plane region that can be a candidate road boundary (which is the boundary between plane regions, and, for example, the boundary between the road surface and the side surface of a sidewalk or a curb) and the direction of the edge of the plane region by using the distance image generated by the distance image generation unit 103, and transmits the extracted direction of the edge of the plane region to the feature integration unit 106. Specifically, based on the distance image generated by the distance image generation unit 103, if distance values of multiple pixels adjacent in a longitudinal direction and a lateral direction have the predetermined continuity, the region corresponding to the multiple pixels is detected as a plane region; if distance values of multiple pixels adjacent in a longitudinal direction and a lateral direction do not have the predetermined continuity (i.e., are discontinuous), the region corresponding to the multiple pixels is detected as the edge of a plane region (the boundary between adjacent plane regions). Then, of directions that the detected edges of plane regions have, the most frequently detected direction is extracted as the direction of the edge of the plane regions.

Incidentally, the plane regions include a plane surface and a curved surface, and the edges of plane regions extracted by the boundary direction extraction unit 105 include a linear edge and a curved edge.

The feature integration unit 106 integrates the direction (the direction of the linear site that can be a candidate white line) extracted by the linear site direction extraction unit 104 and the direction (the direction of the edge of the plane region that can be a candidate road boundary) extracted by the boundary direction extraction unit 105 on the premise that the direction of the white line and the direction of the edge have relevance (for example, they are nearly parallel to each other), and transmits a result of the integration to the travel route direction estimation unit 107. The travel route direction estimation unit 107 estimates the direction of a travel route around the vehicle from the result of the integration by the feature integration unit 106, and transmits the estimated direction to the demarcation line position detection unit 108 and the road boundary position detection unit 109.

Specifically, as shown in FIG. 3, the feature integration unit 106 sums up the direction of the linear site extracted by the linear site direction extraction unit 104 and the direction of the edge of the plane region extracted by the boundary direction extraction unit 105, and the travel route direction estimation unit 107 recognizes the dominant direction (for example, the direction having the highest frequency of appearance) in the sum of the directions as the direction of the travel route around the vehicle.

Here, as a method of the summing up by the feature integration unit 106, the direction extracted by the linear site direction extraction unit 104 and the direction extracted by the boundary direction extraction unit 105 can be simply summed up, or the direction extracted by the linear site direction extraction unit 104 and the direction extracted by the boundary direction extraction unit 105 can be weighted according to respective reliabilities and then summed up.

For example, a white line has a significant edge on an image, and thus is generally assumed to be highly reliable; therefore, rather than the direction extracted by the boundary direction extraction unit 105, the direction extracted by the linear site direction extraction unit 104 can be weighted, and then the both directions can be summed up. Furthermore, as will be described later, when using a distance image generated from distance information detected by a distance detection sensor such as a radar is assumed to be more reliable than using an image acquired by a camera, rather than the direction extracted by the linear site direction extraction unit 104, the direction extracted by the boundary direction extraction unit 105 can be weighted, and then the both directions can be summed up. That is, the weighting according to the reliability can be adjusted according to the conditions of the travel route seen in an image, the characteristics of means of acquiring information used in the extraction of the direction of the linear site and the extraction of the direction of the edge of the plane region, etc. Moreover, the weighting of the direction extracted by the linear site direction extraction unit 104 and the direction extracted by the boundary direction extraction unit 105 can be adjusted on the basis of information acquired in the past (for example, information on the direction of the linear site and the direction of the edge of the plane region) . By weighting the direction according to the reliability in this way, the direction of the travel route is assumed to be able to be estimated more accurately than the case where the direction extracted by the linear site direction extraction unit 104 and the direction extracted by the boundary direction extraction unit 105 can be simply summed up.

Furthermore, to suppress the generation of noise, the feature integration unit 106 can extract directions having a predetermined range of directions (for example, ± 30 degrees to the traveling direction of the vehicle) from the direction extracted by the linear site direction extraction unit 104 and the direction extracted by the boundary direction extraction unit 105, and then sum up the direction of the linear site extracted by the linear site direction extraction unit 104 and the direction of the edge of the plane region extracted by the boundary direction extraction unit 105.

Incidentally, in FIG. 3, the direction of the linear site and the direction of the edge of the plane region are identified from an overhead view image generated by using overhead view conversion; however, it goes without saying that an overhead view image does not always have to be generated.

As described above, when the direction of the travel route has been estimated by the travel route direction estimation unit 107, the demarcation line position detection unit 108 detects the position of a white line (a demarcation line) on the travel route by using a result of the estimation by the travel route direction estimation unit 107, and outputs the detected white line position to the travel assistance control device 12. Specifically, only a region near the direction estimated by the travel route direction estimation unit 107 is extracted from the left image acquired by the left image acquisition unit 101, and the white line position is detected by searching the extracted region.

Furthermore, the road boundary position detection unit 109 detects the position of a road boundary on the travel route by using a result of the estimation by the travel route direction estimation unit 107, and outputs the detected road boundary position to the travel assistance control device 12. Specifically, only a region near the direction estimated by the travel route direction estimation unit 107 is extracted from the distance image generated by the distance image generation unit 103, and the road boundary is detected by searching the extracted region.

Then, the travel assistance control device 12 carries out the travel assistance for the vehicle on the basis of the white line position detected by the demarcation line position detection unit 108 and the road boundary position detected by the road boundary position detection unit 109. Specifically, on the basis of the white line position detected by the demarcation line position detection unit 108, the road boundary position detected by the road boundary position detection unit 109, and the conditions of the vehicle (the position, the traveling direction, the speed, the acceleration, etc.), the travel assistance control device 12 determines whether or not the vehicle is likely to depart from a traffic lane, whether or not the vehicle has come close to a road boundary such as a sidewalk or a curb, and the like. Then, when having determined that the vehicle is about to depart from a traffic lane or has come close to a road boundary such as a sidewalk or a curb, the travel assistance control device 12 activates the speaker 15 of the vehicle V to alert a driver (call for attention), or calculates the accelerator control amount, the brake control amount, and the steering control amount for assisting the travel of the vehicle V and performs the control of the accelerator 13, the brake 14, the steering 16, and the like.

In this way, in the travel route recognition device 10 in the present embodiment 1, the direction of a travel route is estimated on the basis of the direction of a linear site included in an image acquired by (the left camera 11a of) the stereo camera device 11 and the direction of the edge of a plane region included in a distance image generated based on multiple images acquired by (the cameras 11a and 11b of) the stereo camera device 11, and the position of a demarcation line and the position of a road boundary on the travel route is detected on the basis of the direction of the travel route, thereby the direction of a travel route around a vehicle can be accurately estimated, and a white line and a road boundary on the travel route can be detected in a state where highly accurate condition of constraint are given; therefore, for example, even in case the accuracy of detecting both a white line and a road boundary on the travel route is decreased, the positions of the white line and the road boundary can be recognized (estimated) accurately and stably, thus the occurrence of a false alarm or error control can be suppressed.

### [Embodiment 2]

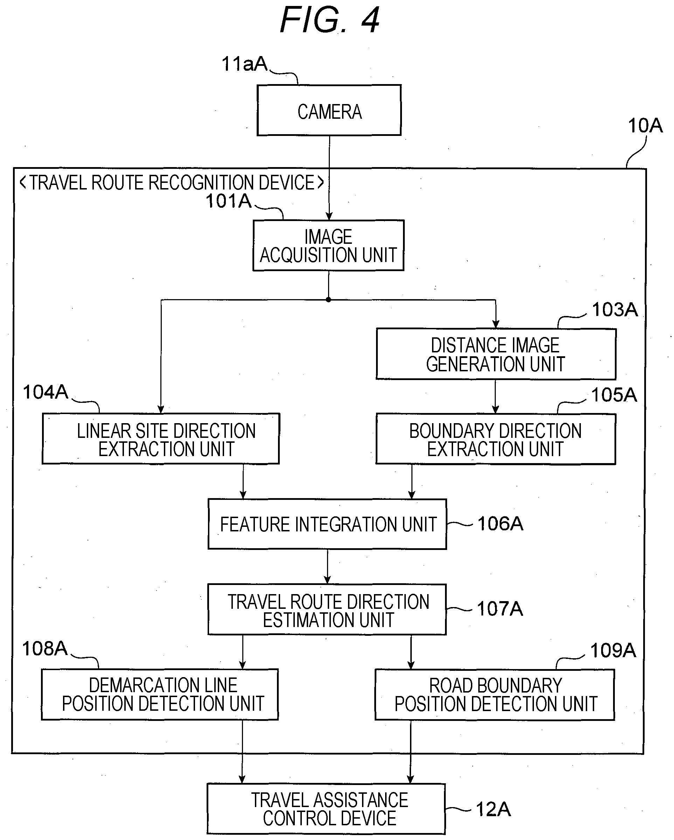

FIG. 4 shows an internal configuration of embodiment 2 of a travel route recognition device according to the present invention. A travel route recognition device 10A in embodiment 2 differs mainly in a method of generating a distance image from the travel route recognition device 10 in embodiment 1 described above, and the other configurations are about the same as the travel route recognition device 10 in embodiment 1. Therefore, in the following description, detailed description of the same configurations as the travel route recognition device 10 in embodiment 1 is omitted.

In embodiment 2, as shown in FIG. 4, one camera (monocular camera) 11aA is mounted on a vehicle, and the travel route recognition device 10A is configured to recognize a travel route on the basis of image information of an area to be photographed in front of the vehicle acquired in time series by the camera 11aA, for example, under the condition where the vehicle is traveling (i.e., under the condition where the position of the vehicle changes).

Specifically, the travel route recognition device 10A includes an image acquisition unit 101A, a distance image generation unit 103A, a linear site direction extraction unit 104A, a boundary direction extraction unit 105A, a feature integration unit 106A, a travel route direction estimation unit 107A, a demarcation line position detection unit 108A, and a road boundary position detection unit 109A.

The image acquisition unit 101A acquires an image including position information on the photographing position from the camera 11aA, and transmits the acquired image to the distance image generation unit 103A and the linear site direction extraction unit 104A.

The distance image generation unit 103A generates a distance image (a parallax image) by using multiple images acquired including position information acquired by the image acquisition unit 101A, and transmits the generated distance image to the boundary direction extraction unit 105A. Incidentally, a method for the distance image generation unit 103A to generate a distance image is about the same as that by the distance image generation unit 103 in embodiment 1.

Then, just like embodiment 1 described above, the linear site direction extraction unit 104A extracts the direction of a linear site on the travel route by using the image acquired by the image acquisition unit 101A, and the boundary direction extraction unit 105A extracts the direction of the edge of a plane region on the travel route by using the distance image generated by the distance image generation unit 103A, and then the feature integration unit 106A and the travel route direction estimation unit 107A estimate the direction of the travel route on the basis of the direction extracted by the linear site direction extraction unit 104A and the direction extracted by the boundary direction extraction unit 105A. Furthermore, the demarcation line position detection unit 108A and the road boundary position detection unit 109A detect the white line (demarcation line) position and the road boundary position on the travel route by using a result of the estimation by the travel route direction estimation unit 107A.

In this way, according to the travel route recognition device 10A in the present embodiment 2, the direction of a travel route present in front of a vehicle and the positions of a white line (a demarcation line) and a road boundary on the travel route are recognized by using only one camera 11aA, thereby the device configuration of the travel route recognition device 10A can be simplified remarkably.

### [Embodiment 3]

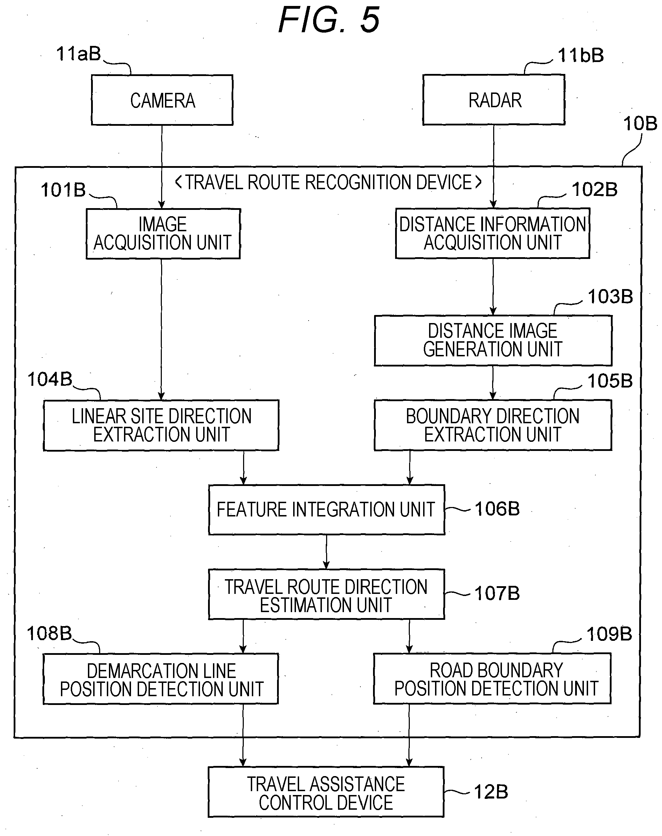

FIG. 5 shows an internal configuration of embodiment 3 of a travel route recognition device according to the present invention. A travel route recognition device 10B in embodiment 3 differs mainly in a method of generating a distance image from the travel route recognition devices 10 and 10A in embodiments 1 and 2 described above, and the other configurations are about the same as the travel route recognition devices 10 and 10A in embodiments 1 and 2. Therefore, in the following description, detailed description of the same configurations as the travel route recognition devices 10 and 10A in embodiments 1 and 2 is omitted.

In embodiment 3, as shown in FIG. 5, one camera 11aB is mounted on a vehicle, and a radar 11bB as a distance detection unit is mounted on the front console or the like of the vehicle, and the travel route recognition device 10B is configured to recognize a travel route on the basis of image information of an area to be photographed in front of the vehicle acquired in time series by the camera 11aB and distance information of an area to be detected around the vehicle acquired in time series by the radar 11bB.

Specifically, the travel route recognition device 10B includes an image acquisition unit 101B, a distance information acquisition unit 102B, a distance image generation unit 103B, a linear site direction extraction unit 104B, a boundary direction extraction unit 105B, a feature integration unit 106B, a travel route direction estimation unit 107B, a demarcation line position detection unit 108B, and a road boundary position detection unit 109B.

The image acquisition unit 101B acquires an image (an image not including distance information) taken by the camera 11aB, and transmits the acquired image to the linear site direction extraction unit 104B.

On the other hand, the distance information acquisition unit 102B acquires distance information detected by the radar 11bB, and transmits the acquired distance information around the vehicle to the distance image generation unit 103B.

The distance image generation unit 103B generates a distance image (a parallax image) by using the distance information acquired by the distance information acquisition unit 102B, and transmits the generated distance image to the boundary direction extraction unit 105B.

Then, just like embodiments 1 and 2 described above, the linear site direction extraction unit 104B extracts the direction of a linear site on the travel route by using the image acquired by the image acquisition unit 101B, and the boundary direction extraction unit 105B extracts the direction of the edge of a plane region on the travel route by using the distance image generated by the distance image generation unit 103B, and then the feature integration unit 106B and the travel route direction estimation unit 107B estimate the direction of the travel route on the basis of the direction extracted by the linear site direction extraction unit 104B and the direction extracted by the boundary direction extraction unit 105B. Furthermore, the demarcation line position detection unit 108B and the road boundary position detection unit 109B detect the white line (demarcation line) position and the road boundary position on the travel route by using a result of the estimation by the travel route direction estimation unit 107B.

In general, the distance information detected by the radar 11bB is assumed to be more accurate than distance information obtained from multiple images taken by a plurality of cameras. Accordingly, in the case of the present embodiment, it is assumed that in integration processing by the feature integration unit 106B, rather than the direction extracted by the linear site direction extraction unit 104B, the direction extracted by the boundary direction extraction unit 105B is weighted, and then the both directions can be summed up, and the direction of the travel route is estimated by using a result of the integration.

In this way, according to the travel route recognition device 10B in the present embodiment 3, a distance image is generated from information obtained from the radar 11bB, and the direction of a travel route present in front of a vehicle and the positions of a white line (a demarcation line) and a road boundary on the travel route are recognized, thereby, for example, even in case the accuracy of detecting both a white line and a road boundary on the travel route is decreased, the positions of the white line and the road boundary can be recognized (estimated) more accurately and stably.

Incidentally, in embodiments 1 to 3 described above, the direction of a travel route present in front of a vehicle and the demarcation line position, the road boundary position, etc. on the travel route are recognized; however, it goes without saying that, for example, a camera or the like can be installed with its lens pointing behind or the side of the vehicle, and the direction of a travel route present behind or the side of the vehicle and the demarcation line position, the road boundary position, etc. on the travel route can be recognized.

Incidentally, the present invention is not limited to embodiments 1 to 3 described above, and includes various modified forms. For example, the above-described embodiments 1 to 3 are described in detail to explain the invention in ways easy to understand, and are not always limited to those including all the configurations described. Furthermore, part of a configuration of one embodiment can be replaced with a configuration of another embodiment, or a configuration of one embodiment can be added with a configuration of another embodiment. Moreover, part of a configuration of an embodiment can be added, deleted, or replaced with another configuration.

Furthermore, the control lines and information lines assumed to be necessary for explanation are illustrated, and all the control lines and information lines are not always illustrated. It can be assumed that almost all configurations are actually connected to one another.

### Reference Signs List

1 ... travel assistance system, 10 ... travel route recognition device, 11 ... stereo camera device, 11a ... left camera (image pickup unit), 11b ... right camera (image pickup unit), 12 ... travel assistance control device, 101 ... left image acquisition unit, 102 ... right image acquisition unit, 103 ... distance image generation unit, 104 ... linear site direction extraction unit, 105 ... boundary direction extraction unit, 106 ... feature integration unit, 107 ... travel route direction estimation unit, 108 ... demarcation line position detection unit, 109 ... road boundary position detection unit

## Claims

1. A travel route recognition device for recognizing a travel route on which a vehicle travels, the travel route recognition device comprising:
a linear site direction extraction unit that extracts a direction of a linear site included in an image acquired by an image pickup unit mounted on the vehicle;
a distance image generation unit that generates a distance image including three-dimensional distance information from the image acquired by the image pickup unit or distance information detected by a distance detection unit mounted on the vehicle;
a boundary direction extraction unit that extracts a direction of an edge of a plane region included in the distance image generated by the distance image generation unit; and
a travel route direction estimation unit that estimates a direction of the travel route based on the direction of the linear site and the direction of the edge of the plane region.

2. The travel route recognition device according to claim 1, wherein the travel route direction estimation unit estimates the direction of the travel route by weighting the direction of the linear site and the direction of the edge of the plane region according to respective reliabilities.

3. The travel route recognition device according to claim 1, wherein the travel route direction estimation unit estimates the direction of the travel route based on relevance between the linear site and the edge of the plane region.

4. The travel route recognition device according to claim 1, wherein the travel route direction estimation unit estimates the direction of the travel route by extracting directions of a linear site and directions of an edge of a plane region that have a predetermined range of directions from the direction of the linear site and the direction of the edge of the plane region.

5. The travel route recognition device according to claim 1, wherein
a plurality of image pickup units are provided, and the distance image generation unit generates the distance image from multiple images acquired synchronously by the plurality of image pickup units.

6. The travel route recognition device according to claim 1, wherein
one image pickup unit is provided, and
the distance image generation unit generates the distance image from multiple images acquired in time series by the one image pickup unit.

7. The travel route recognition device according to claim 1, wherein the distance image generation unit generates the distance image from distance information detected by the distance detection unit.

8. The travel route recognition device according to claim 1, further comprising:
a demarcation line position detection unit that detects a position of a demarcation line on the travel route based on the direction of the travel route; and
a road boundary position detection unit that detects a position of a road boundary on the travel route based on the direction of the travel route.

9. A travel assistance system, comprising:
the travel route recognition device according to claim 8; and
a travel assistance control device that assists travel of the vehicle based on the position of the demarcation line and the position of the road boundary that have been detected by the travel route recognition device.
